# EUROPEAN PATENT APPLICATION

(11) **EP 4 676 136 A1**
(43) Date of publication of application: **07.01.2026**
(21) Application number: 24763237.5
(22) Date of filing: 01.03.2024
(51) Int. Cl.: H04W 64/00, H04L 5/00

(54) **POSITIONING REFERENCE SIGNAL TRANSMISSION METHOD AND APPARATUS, AND COMPUTER READABLE STORAGE MEDIUM**

(30) Priority: 02.03.2023 CN 202310194496
(71) Applicant: Spreadtrum Semiconductor (Nanjing) Co., Ltd., Nanjing, Jiangsu 211899 (CN)
(72) Inventor: LEI, Zhenzhu, Nanjing, Jiangsu 211899 (CN)
(74) Representative: Casalonga
(86) International application number: PCT/CN2024/079495
(87) International publication number: WO 2024/179557

(57) **Abstract**

A positioning reference signal transmission method and apparatus, and a computer readable storage medium. The positioning reference signal transmission method comprises: acquiring configuration information (101); and on the basis of the configuration information, determining positioning reference signal resources associated with a same radio frequency link (102). By adopting the solution, a terminal device can determine whether positioning reference signals sent by a network device at the same time over different carriers/positioning frequency layers use a same radio frequency link.

## Description

The present application claims priority to a China patent application filed with the China Patent Office on March 2, 2023, with application No. 202310194496.X and entitled "POSITIONING REFERENCE SIGNAL TRANSMISSION METHOD AND APPARATUS, AND COMPUTER READABLE STORAGE MEDIUM", the entire contents of which are incorporated herein by reference.

### FIELD OF TECHNOLOGY

The present invention relates to wireless communication technology, and particularly to a method, an apparatus and a computer readable storage medium for transmission of a positioning reference signal.

### BACKGROUND

With the further evolution of 5G technology, in order to further improve positioning accuracy to meet the demand for positioning accuracy in more scenarios, one implementation is to increase the bandwidth of Positioning Reference Signal (PRS) transmission. A direct way to increase the transmission bandwidth is carrier aggregation, which means that a Transmission and Reception Point (TRP) or a terminal device sends positioning reference signals on multiple carriers/positioning frequency layers simultaneously, and the terminal device or TRP receives positioning reference signals on the multiple carriers/positioning frequency layers simultaneously.

It remains a problem to achieve carrier aggregation transmission of positioning reference signals.

### SUMMARY

One of the objectives of the embodiments of the present invention is to provide a method for transmission of a positioning reference signal. The terminal device may determine whether the network device use a same radio frequency RF chain to send PRSs on different carriers/positioning frequency layers with the method for transmission of a positioning reference signal.

To achieve the above objectives, an embodiment of the present invention provides a method for transmission of a positioning reference signal. The method comprises: obtaining configuration information; determining positioning reference signal resources that are associated with a same RF chain based on the configuration information.

Optionally, the determining positioning reference signal resources associated with the same RF chain based on the configuration information comprises: obtaining associated positioning reference signal resources based on the configuration information; determining that the associated positioning reference signal resources are associated with the same RF chain.

Optionally, the positioning reference signal comprises at least one of: a downlink positioning reference signal, an uplink sounding reference signal.

Optionally, the positioning reference signal comprises the downlink positioning reference signal; the obtaining associated positioning reference signal resources based on the configuration information comprises: obtaining associations of positioning frequency layers based on the configuration information; determining positioning reference signal resources on associated positioning frequency layers as the associated positioning reference signal resources.

Optionally, the positioning reference signal comprises the uplink sounding reference signal; the obtaining associated positioning reference signal resources based on the configuration information comprises: obtaining associations of carriers based on the configuration information; determining positioning reference signal resources on associated carriers as the associated positioning reference signal resources.

Optionally, the obtaining associated positioning reference signal resources based on the configuration information comprises: obtaining associations of positioning reference signal resource sets based on the configuration information; determining positioning reference signal resources of associated positioning reference signal resource sets as the associated positioning reference signal resources.

Optionally, the positioning reference signal comprises the downlink positioning reference signal, and the associated positioning reference signal resource sets are associated with different positioning frequency layers.

Optionally, the positioning reference signal comprises the uplink sounding reference signal, and the associated positioning reference signal resource sets are associated with different carriers.

Optionally, the associated positioning reference signal resources are associated with different positioning reference signal resource sets or a same positioning reference signal resource set.

Optionally, the based on the configuration information further comprises obtaining positioning frequency layer indication information from configuration parameters of a first positioning reference signal resource set based on the configuration information; determining a positioning frequency layer associated with the first positioning reference signal resource set according to the positioning frequency layer indication information.

Optionally, the determining the positioning frequency layer of the first positioning reference signal resource set according to the positioning frequency layer indication information comprises: determining a configuration parameter of a positioning reference signal resource set in the positioning frequency layer, according to the configuration parameters of the first positioning reference signal resource set and configuration parameters of the positioning frequency layer associated with the first positioning reference signal resource set.

Optionally, the method for transmission of a positioning reference signal further comprises: receiving a positioning reference signal transmitted on the positioning frequency layer indicated by the positioning frequency layer indication information according to the configuration parameters of the first positioning reference signal resource set.

Optionally, the obtaining associated positioning reference signal resources based on the configuration information comprises: obtaining positioning frequency layer indication information from configuration parameters of a first positioning reference signal resource based on the configuration information; determining a positioning frequency layer associated with the first positioning reference signal resource according to the positioning frequency layer indication information.

Optionally, the determining the positioning frequency layer associated with the first positioning reference signal resource according to the positioning frequency layer indication information comprises: determining a configuration parameter of a positioning reference signal resource in the positioning frequency layer, according to the configuration parameters of the first positioning reference signal resource and configuration parameters of the positioning frequency layer associated with the first positioning reference signal resource.

Optionally, the method for transmission of a positioning reference signal further comprises: receiving a positioning reference signal transmitted on the positioning frequency layer indicated by the positioning frequency layer indication information according to the configuration parameters of the first positioning reference signal resource.

To achieve the above objectives, an embodiment of the present invention further provides another method for transmission of a positioning reference signal. The method comprises: generating configuration information, the configuration information indicating positioning reference signal resources that are associated with a same RF chain; and sending the configuration information.

Optionally, the configuration information indicates associated positioning reference signal resources, and the associated positioning reference signal resources are associated with the same RF chain.

Optionally, the configuration information indicates associations of positioning frequency layers.

Optionally, the configuration information indicates associations of carriers.

Optionally, the configuration information indicates associations of positioning reference signal resource sets.

Optionally, the configuration information indicates associations of positioning reference signal resources.

Optionally, the configuration information indicates configuration parameters of a first positioning reference signal resource set, and the configuration parameters of the first positioning reference signal resource set include positioning frequency layer indication information, and a positioning frequency layer associated with the first positioning reference signal resource set is different from the positioning frequency layer indicated by the positioning frequency layer indication information.

Optionally, the configuration information indicates configuration parameters of a first positioning reference signal resource, and the configuration parameters of the first positioning reference signal resource set include positioning frequency layer indication information, and a positioning frequency layer associated with the first positioning reference signal resource is different from the positioning frequency layer indicated by the positioning frequency layer indication information.

An embodiment of the present invention further provides an apparatus for transmission of a positioning reference signal . The apparatus comprises: an obtaining unit for obtaining configuration information; a determination unit for determining positioning reference signal resources that are associated with a same RF chain based on the configuration information.

An embodiment of the present invention further provides another apparatus for transmission of a positioning reference signal. The apparatus comprises: a generation unit for generating configuration information, the configuration information indicating positioning reference signal resources that are associated with a same RF chain; a sending unit for sending the configuration information.

An embodiment of the present invention further provides a computer-readable storage medium, the computer-readable storage medium being a non-volatile storage medium or a non-transitory storage medium having computer programs stored thereon. The computer programs, when executed by a processor, cause the steps of any one of the method for transmission of a positioning reference signal described above to be performed.

An embodiment of the present invention further provides another apparatus for transmission of a positioning reference signal, comprising a memory and a processor, the memory having computer programs executable on the processor stored thereon. The processor, when executing the computer programs, performs the steps of any one of the method for transmission of a positioning reference signal described above.

An embodiment of the present invention further provides yet another apparatus for transmission of a positioning reference signal , comprising a memory and a processor, the memory having computer programs executable on the processor stored thereon. The processor, when executing the computer programs, performs the steps of any one of the method for transmission of a positioning reference signal described above.

Compared with the prior art, the technical solution of the present embodiment provides the following positive effects:
The terminal device obtains configuration information and determines positioning reference signal resources that are associated with a same RF chain based on the configuration information. Thus, the terminal device may determine, according to the configuration information, whether the network device use the same RF chain to send the positioning reference signal resources on different positioning frequency layers simultaneously. The network device may also inform, via the indication information, the terminal device of using the same RF chain to send the positioning reference signal resources on different carriers simultaneously.

### BRIEF DESCRIPTION OF THE DRAWINGS

Figure 1 is a flowchart of a method for transmission of a positioning reference signal in an embodiment of the present invention;
Figure 2 is a flowchart of another method for transmission of a positioning reference signal in an embodiment of the present invention;
Figure 3 is a schematic structure diagram of an apparatus for transmission of a positioning reference signal in an embodiment of the present invention;
Figure 4 is a schematic structure diagram of anther apparatus for transmission of a positioning reference signal in an embodiment of the present invention.

### DETAILED DESCRIPTION

Usually, to ensure positioning accuracy, a TRP is required to use a same radio frequency chain (RF Chain) to send PRSs on multiple carriers/positioning frequency layers. Accordingly, a terminal device uses the same RF chain to receive the PRSs on multiple carriers/positioning frequency layers. In an existing framework for PRS configuration, a TRP is enabled to send PRSs on multiple positioning frequency layers simultaneously. However, the terminal device/the TRP may use different RF chains to send PRSs on different carriers/positioning frequency layers, and the terminal device cannot determine whether the network device (i.e. the TRP) use the same RF chain to send PRSs on different positioning frequency layers, and the network device cannot determine whether the terminal use the same RF chain to send the PRSs.

In the embodiments of the present invention, the terminal device may determine, according to configuration information, whether the network device use a same RF chain to transmit positioning reference signal resources on different positioning frequency layers simultaneously. The network device may also inform, via indication information, the terminal device of using the same RF chain to send the positioning reference signal resources on different carriers simultaneously.

In order to make the above objectives, features, and beneficial effects of the present invention more obvious and understandable, descriptions of specific embodiments of the present invention will be provided in detail below in conjunction with the figures.

The terminal device described in the embodiments of the present application is a device equipped with wireless communication functionality, also known as a terminal, a mobile station (MS), a mobile terminal (MT), an access terminal device, a vehicle mounted terminal device, an industrial control terminal device, a user equipment (UE), a UE unit, a UE station, a mobile station, a remote station, a remote terminal device, a mobile device, a wireless communication device, a UE agent or a UE device, etc. A UE may be fixed or mobile. It should be noted that a UE may support at least one wireless communication technology, such as LTE, NR, etc. By way of example, the UE may be a mobile phone, a pad, a desktop, a laptop, an all-in-one device, an on-board terminal, a virtual reality (VR) UE, an augmented reality (AR) UE, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, a cellular phone, a cordless phone, a Session Initiation Protocol (SIP) phone, a wireless local loop (WLL) station, a personal digital assistant (PDA), a handheld device with wireless communication functionality, a computing device or another processing device connected to wireless modems, a wearable device, a UE in future mobile communication networks or a UE in future evolved public land mobile networks (PLMNs), etc. In some embodiments of the present application, the UE may also be a device with sending and receiving functionalities, such as a chip system. The chip system may include chips and other discrete devices among other things.

In the embodiments of the present application, a network device is a device that provides wireless communication functionality for the terminal devices, also known as a radio access network (RAN) device, or an access network element, an access network device, etc. The network device may support at least one wireless communication technology, such as LTE, NR, etc. For example, a network device includes but is not limited to: a next generation Node B (gNB) in 5G, an evolved Node B (eNB), a radio network controller (RNC), a Node B (NB), a base station controller (BSC), a base transceiver station (BTS), a home base station (e.g. a home evolved node B or a home node B, HNB), a baseband unit (BBU), a TRP, a transmitting point (TP), a mobile switching center, etc. The network device may also be a wireless controller, a centralized unit (CU), and/or a distributed unit (DU) in cloud radio access network (CRAN) scenarios, or the network device may be a relay station, an access point, a vehicle mounted device, a terminal device, a wearable device, and a network device in future mobile communications or future evolving PLMNs. In some embodiments, the network device may also be a device that provides wireless communication functionality for the terminal devices, such as a chip system. For example, a chip system may include chips and other discrete components.

In some embodiments, the network device may also communicate with Internet Protocol (IP) networks, such as Internet, private IP networks, or other data networks.

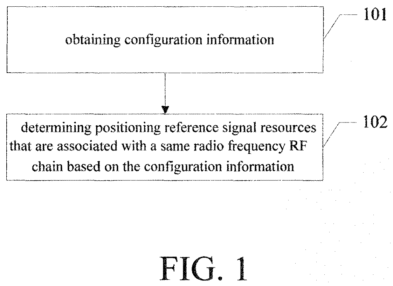

An embodiment of the present invention provides a method for transmission of a positioning reference signal, the detailed descriptions of which will be provided below through specific steps in connection with FIG. 1.

In a specific implementation, the method for transmission of a positioning reference signal described below in steps 101 to 102 may be performed by a chip with data processing functionality in the terminal device, or by a chip module containing a chip with data processing functionality in the terminal device, or by the terminal device. The following contents are described in the context of the terminal device performing the method as an example for illustration.

Step 101: obtaining configuration information.

In a specific implementation, a terminal device may interact with a network device in advance to inform the network device of its capability to support the reception of carrier aggregation. Upon determining that the terminal device is able to receive the carrier aggregation, the network device may generate configuration information and send the configuration information to the terminal device.

The terminal device may receive the configuration information sent by network device. For example, the terminal device may receive the configuration information sent by the network device directly; alternatively, the terminal device may receive the configuration information sent by network device through a relay device. In the embodiments of the present invention, the way of obtaining the configuration information by the terminal device is not limited. The specific implementation processes of the terminal device interacting with the network device to obtain the configuration information may also be provided with reference to the existing protocols.

In an embodiment of the present invention, the network device may configure PRS resources associated with a same RF chain via the configuration information. Specifically, the network device may configure whether the PRS resources are associated with each other. The network device may determine that PRS resources transmitted simultaneously using a same RF chain are associated.

Specifically, the network device may configure, in the configuration information, whether the PRS resources are associated in the form of a mapping. Alternatively, in the configuration information, the network device may configure whether the PRS resources are associated in the form of a collection. The collection may be a collection of PRS resources, a collection of PRS resource sets, or a collection of positioning frequency layers. It should be noted that said "collection" is different from the set in the following descriptions. For example, the above collection of PRS resources may include a plurality of PRS resources, but the plurality of PRS resources may be from different PRS resource sets.

In an embodiment of the present invention, PRS resources associated with a same RF chain may refer to PRS resources used to send PRSs using the same RF chain.

For example, if a PRS resource 1 and a PRS resource 2 are associated with a same RF chain, the network device utilizes the same RF chain to send PRSs simultaneously with the PRS resource 1 and the PRS resource 2. The PRS resource 1 and the PRS resource 2 may belong to a same PRS resource set, or belong to different PRS resource sets in a same positioning frequency layer, or belong to different positioning frequency layers.

In a specific implementation, in addition to indication of PRS resources that are associated with a same RF chain, the configuration information may also include parameters corresponding to the PRSs.

In a specific application, the structure of parameters of a PRS is a four-layer structure, which is in a sequence of: a positioning frequency layer, a TRP identifier (ID), a PRS resource set, and a PRS resource. That is to say, one positioning frequency layer may include a plurality of TRPs, one TRP may correspond to a plurality of PRS resource sets (each resource set has a one-to-one ID), and one PRS resource set may include a plurality of PRS resources (each resource has a one-to-one ID).

In the PRS parameters configured by the network device, some of the parameters are layer-level, and a layer-level parameter is applicable to all resources included within this layer. The layer-level parameters may include a frequency domain resource reference location of the PRS, a subcarrier spacing of the PRS, a cyclic prefix type of the PRS, a resource pattern of the PRS, a starting resource block (RB) of the PRS, and a bandwidth of PRSs, etc.

Some parameters are set-level and are applicable to all resources within this set. For example, a periodicity of the PRS resource, a starting slot of the PRS resource, a repetition factor of the PRS resource set, a time interval between the PRS resources, a muting pattern of the PRS transmission, etc.

Some parameters are resource-level and only indicate configurations of the corresponding resource. For example, a starting location of a first symbol resource element (RE) occupied by the PRS, and a RE location offset relative to a first symbol, an offset between the PRS and a first slot of the PRS resource set (in slots), a starting symbol location of the PRS, and the number of symbols occupied by the PRS.

Step 102: determining positioning reference signal resources associated with the same RF chain based on the configuration information.

In a specific implementation, the terminal device may determine the PRS resources associated with the same RF chain according to the obtained configuration information. Specifically, the terminal device may obtain the associated PRS resources from the configuration information and determine that the associated PRS resources are associated with the same RF chain.

In an embodiment of the present invention, the network device may configure the associations of the positioning frequency layers in the configuration information. The terminal device receives the configuration information and determines the PRS resources on the associated positioning frequency layers as the associated PRS resources.

In a specific implementation, a PRS may include a downlink PRS and an uplink sounding reference signal (SRS).

In an embodiment of the present invention, when the PRS includes the downlink PRS, the terminal device may obtain the associations of positioning frequency layers based on the configuration information. When certain positioning frequency layers are associated, it may be determined that the PRS resources on the associated positioning frequency layers are associated.

In a specific implementation, the above associated positioning frequency layers may correspond to a same TRP. As may be seen from the above embodiments, one positioning frequency layer may correspond to at least one PRS resource set, and one PRS resource set may include at least one PRS resource. When the network device configures that the positioning frequency layers are associated, it indicates that all PRS resource sets and all PRS resources corresponding to the positioning frequency layers are associated.

For example, the network device configures that TRP1 has PRSs to send on a positioning frequency layer 1, a positioning frequency layer 2, and a positioning frequency layer 3, where the positioning frequency layer 1 and the positioning frequency layer 3 are associated. The terminal device receives configuration information and determines that the positioning frequency layer 1 and the positioning frequency layer 3 are associated. Therefore, it is determined that all PRS resources on the positioning frequency layer 1 and all PRS resources on the positioning frequency layer 3 are associated. That is to say, the network device uses a same RF chain to send PRSs utilizing all PRS resources corresponding to the positioning frequency layer 1 and the positioning frequency layer 3.

In an embodiment of the present invention, when the PRS includes the uplink SRS, the network device may configure the associations of carriers in the configuration information. The terminal device receives the configuration information and determines the PRS resources on the associated carriers as the associated PRS resources. The terminal device uses a same RF chain to send the uplink SRS utilizing PRS resources on the associated carriers.

In a specific implementation, the above carriers may correspond to a same TRP. One carrier may correspond to at least one PRS resource set, and one PRS resource set may include at least one PRS resource. When the network device configures that the carriers are associated, it indicates that all PRS resource sets and all PRS resources corresponding to the carriers are associated.

For example, a carrier 1 corresponds to a PRS resource set 1, which includes 10 PRS resources. A carrier 2 corresponds to a PRS resource set 2, which includes 20 PRS resources. When the network device configures that the carrier 1 and the carrier 2 are associated, the carrier 1 and the PRS resource set 1 and the PRS resource set 2 are associated. That is to say, the terminal device uses a same RF chain to send the uplink SRS utilizing all corresponding PRS resources from the PRS resource sets of the carrier 1 and the carrier 2.

In an embodiment of the present invention, the network device may also configure the associations of PRS resource sets in the configuration information.

Specifically, when the PRS includes the downlink PRS, the network device may configure explicitly, in the configuration information, associated PRS resource sets for a PRS resource set, and a positioning frequency layer corresponding to each one of the associated PRS resource sets.

In a specific implementation, the PRS resource sets that are associated may correspond to different positioning frequency layers of a same TRP, or correspond to a same positioning frequency layer of a same TRP.

For example, a PRS resource set A and a PRS resource set B are associated. The PRS resource set A corresponds to a positioning frequency layer 1, and the PRS resource set B corresponds to a positioning frequency layer 2.

Then, the network device configures explicitly that the PRS resource set A is associated with the PRS resource set B, and that the PRS resource set B corresponds to the positioning frequency layer 2.

For another example, a PRS resource set A, a PRS resource set B, a PRS resource set C, and a PRS resource set D are associated. The PRS resource set A corresponds to a positioning frequency layer 1, the PRS resource set B and the PRS resource set C correspond to a positioning frequency layer 2, and the PRS resource set D corresponds to a positioning frequency layer 3.

Then, the network device configures explicitly that the PRS resource set A is associated with the PRS resource set B, the PRS resource set B, the PRS resource set C, and the PRS resource set D, and that the PRS resource set B and the PRS resource set C correspond to the positioning frequency layer 2, and the PRS resource set D corresponds to the positioning frequency layer 3.

In a specific implementation, when the PRS includes the uplink SRS, the network device may configure explicitly, in the configuration information, associated PRS resource sets for a PRS resource set and a corresponding carrier for each one of the associated PRS resource sets.

In a specific implementation, some of the PRS resource sets that are associated may correspond to different carriers of a same TRP, or correspond to a same carrier of a same TRP.

For example, a PRS resource set A and a PRS resource set B are associated. The PRS resource set A corresponds to a carrier 1, and the PRS resource set B corresponds to a carrier 2.

Then, the network device configures explicitly that the PRS resource set A is associated with the PRS resource set B, and that the PRS resource set B corresponds to the carrier 2.

As another example, a PRS resource set A, a PRS resource set B, a PRS resource set C, and a PRS resource set D are associated. The PRS resource set A corresponds to a carrier 1, the PRS resource set B and the PRS resource set C correspond to a carrier 2, and the PRS resource set D corresponds to a carrier 3.

Then, the network device configures explicitly that the PRS resource set A is associated with the PRS resource set B, the PRS resource set B, the PRS resource set C, and the PRS resource set D, and that the PRS resource set B and the PRS resource set C correspond to the carrier 2, and the PRS resource set D corresponds to the carrier 3.

The terminal device receives the configuration information and may determine which PRS resource sets are associated. The terminal device may determine the PRS resources from the PRS resource set that are associated as the associated PRS resources.

For example, a network device configures a PRS resource set A in a positioning frequency layer 1, a PRS resource set B in a positioning frequency layer 2, and indicates that the PRS resource set A is associated with the PRS resource set B. The terminal device determines that the network device uses a same RF chain to send downlink PRSs on the PRS resources corresponding to the PRS resource set A and the PRS resource set B.

In an embodiment of the present invention, the network device may also configure the associations of PRS resource in the configuration information.

Specifically, the network device may configure explicitly, in the configuration information, associated PRS resources for a PRS resource, a PRS resource set corresponding to each of the associated PRS resources, and a positioning frequency layer corresponding to the PRS resource set.

In an specific implementation, the associated PRS resources may correspond to a same PRS resource set. Alternatively, some of the associated PRS resource correspond to the same PRS resource set.

For example, a PRS resource 1 is associated with a PRS resource 2. The PRS resource 1 corresponds to a PRS resource set A, which corresponds to a positioning frequency layer 1. The PRS resource 2 corresponds to a PRS resource set B, which corresponds to a positioning frequency layer 2.

The network device configures explicitly that the PRS resource 1 is associated with the PRS resource 2. The terminal device receives the configuration information and determines that the network device configures the PRS resource set A on the positioning frequency layer 1 and the PRS resource set B on the positioning frequency layer 2, and configures that the PRS resource 1 in the PRS resource set A is associated with the PRS resource 2 in the PRS resource set B.

In an embodiment of the present invention, the network device may also add positioning frequency layer indication information in the configuration parameters of the first PRS resource set in the configuration information. The positioning frequency layer indication information indicates positioning frequency layers that are associated with the first PRS resource set. The positioning frequency layers associated with the first PRS resource set may be one or more layers.

The terminal device receives the configuration information, obtains the configuration parameters of the first PRS resource set, and then obtains the positioning frequency layers associated with the first PRS resource set.

The terminal device may determine the configuration parameters of the PRS resource sets on the positioning frequency layers by using the configuration parameters of the first PRS resource set and the configuration parameters of the positioning frequency layers. The terminal device further receives PRSs utilizing the corresponding PRS resource sets on the positioning frequency layers indicated by the positioning frequency layer indication information.

For example, the network device configures, in the configuration information, that PRSs are to be sent on a positioning frequency layer 1, a positioning frequency layer 2, and a positioning frequency layer 3. For a PRS resource set A of the positioning frequency layer 1, the configuration information indicates that the PRS resource set A is associated with the positioning frequency layer 3. The terminal device receives the configuration information, obtains the configuration parameters of the PRS resource set A, and receives PRSs on positioning frequency layer 3 utilizing the configuration parameters.

In an embodiment of the present invention, the network device may also add the positioning frequency layer indication information to the configuration parameters of the first PRS resource in the configuration information. The positioning frequency layer indication information indicates positioning frequency layers that are associated with the first PRS resource. The positioning frequency layers associated with the first PRS resource may be one or more layers.

The terminal device receives the configuration information, obtains the configuration parameters of the first PRS resource, and then obtains the positioning frequency layers associated with the first PRS resource. The terminal device may determine the configuration parameters of PRS resources on the positioning frequency layers with the configuration parameters of the first PRS resource and the positioning frequency layers. The terminal device further receives PRSs utilizing the corresponding PRS resources on the positioning frequency layers indicated by the positioning frequency layer indication information.

For example, the network device configures, in the configuration information, that PRSs are to be sent on a positioning frequency layer 1, a positioning frequency layer 2, and a positioning frequency layer 3. For a PRS resource 1 of the positioning frequency layer 1, the configuration information indicates that the PRS resource 1 is associated with the positioning frequency layer 3. The terminal device receives configuration information, obtains the configuration parameters of the PRS resource 1, and receives PRSs on positioning frequency layer 3 with the configuration parameters.

Summing up, it may be seen that in the embodiments of the present invention, the configuration information is sent by the network device. According to the configuration information, the terminal device may determine whether the network device use a same RF chain to send positioning reference signal resources simultaneously on different positioning frequency layers. The network device may also inform, via the indication information, the terminal device of using the same RF chain to send the positioning reference signal resources on different carriers.

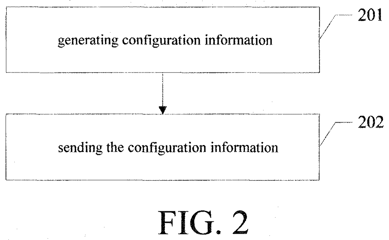

Referring to Figure 2, it is provided another method for transmission of a positioning reference signal in the embodiments of the present invention, which will be illustrated in detail through specific steps.

In a specific implementation, the method for transmission of a positioning reference signal described below in steps 201 to 202 may be performed by a chip with data processing functionality in the network device, or by a chip module containing chips with data processing functionality in the network device, or by the network device. The following contents are described in the context of the network device performing the method as an example for illustration.

Step 201: generating configuration information.

In a specific implementation, upon determining that the terminal device is able to receive carrier aggregation, the network device may generate configuration information and send the configuration information to the terminal device.

In an embodiment of the present invention, the network device may configure PRS resources that are associated with a same RF chain via the configuration information. Specifically, the network device may configure whether the PRS resources are associated. If the PRS resources are associated, it is determined that the associated PRS resources are associated with a same RF chain.

In an embodiment of the present invention, the PRS resources associated with the same RF chain may refer to the PRS resources that are used to send the PRSs using the same RF chain.

In a specific implementation, a PRS includes a downlink PRS and an uplink SRS.

When the PRS includes the downlink PRS, the terminal device receives the configuration information and determines the PRS resources on the associated positioning frequency layers as the associated PRS resources.

When the PRS includes the uplink SRS, the network device may configure the associations of carriers in the configuration information. The terminal device receives the configuration information and determines the PRS resources on the associated carriers as the associated PRS resources.

In an embodiment of the present invention, the network device may also configure the associations of PRS resource sets in the configuration information.

Specifically, when the PRS includes the downlink PRS, the network device may explicitly configure, in the configuration information, associated PRS resource set for a PRS resource set, and a positioning frequency layer corresponding to each one of the associated PRS resource sets.

When the PRS includes the uplink SRS, the network device may configure explicitly, in the configuration information, associated PRS resource set for a PRS resource set and a positioning frequency layer corresponding to each one of the associated PRS resource sets.

In an embodiment of the present invention, the network device may also configure the associations of PRS resource sets in the configuration information.

Specifically, the network device may configure explicitly, in the configuration information, associated PRS resources for a PRS resource, a PRS resource set corresponding to each one of the associated PRS resources, and a positioning frequency layer corresponding to the PRS resource set.

In an embodiment of the present invention, the network device may also add the positioning frequency layer indication information in the configuration parameters of a first PRS resource set in the configuration information. The positioning frequency layer indication information indicates the positioning frequency layer at which the first PRS resource set is located.

In an embodiment of the present invention, the network device may also add the positioning frequency layer indication information to the configuration parameters of a first PRS resource in the configuration information. The positioning frequency layer indication information indicates the positioning frequency layer at which the first PRS resource is located.

Step 202: sending the configuration information.

In a specific implementation, the network device may send the configuration information.

Specifically, the network device may send the configuration information to the terminal device directly. Alternatively, the network device may send the configuration information to a relay device, which then forwards the configuration information to the terminal device.

In a specific implementation, the actions performed by the terminal device upon receiving the configuration information, as well as the specific processes of the network device performing the above steps, may be referred to the descriptions of steps 101 to 102 described above, and will not be repeated here.

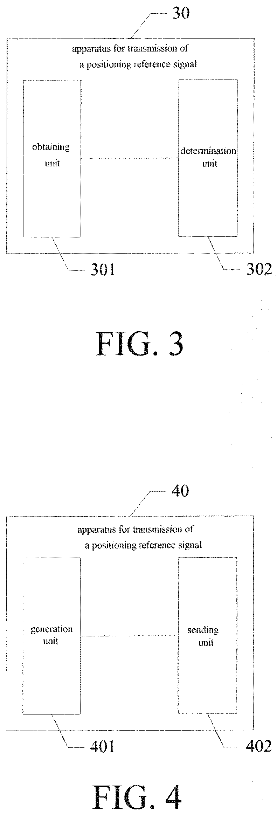

Referring to Figure 3, it is provided an apparatus for transmission of a positioning reference signal 30 in an embodiment of the present invention. The apparatus comprises an obtaining unit 301 and a determination unit 302, wherein:
the obtaining unit 301 obtains configuration information;
the determination unit 302 determines positioning reference signal resources associated with a same RF chain based on the configuration information.

In a specific implementation, the specific processes performed by the above obtaining unit 301 and determination unit 302 may be referred to steps 101 to 102 correspondingly, which will not be repeated here.

In a specific implementation, the above apparatus for transmission of a positioning reference signal 30 may correspond to a chip with data processing functionality in the terminal device, or to a chip module including chips with data processing functionality in the terminal device, or to the terminal device.

Referring to Figure 4, it is provided another apparatus for transmission of a positioning reference signal 40 in an embodiment of the present invention. The apparatus comprises a generation unit 401 and a sending unit 402, wherein:
the generation unit 401 generates configuration information, the configuration information indicating positioning reference signal resources associated with a same RF chain;
the sending unit 402 sends the configuration information.

In a specific implementation, the specific processes performed by the above generation unit 401 and the sending unit 402 may be referred to steps 201 to 202 correspondingly, which will not be repeated here.

In a specific implementation, the above apparatus for transmission of a positioning reference signal 40 may correspond to a chip with data processing functionality in the network device, or to a chip module including chips with data processing functionality in the network device, or to the network device.

In a specific implementation, the various modules/units included in the apparatuses and products described in the above embodiments may be software modules/units, hardware modules/units, or some of them are software modules/units and some of them are hardware modules/units.

For example, for various apparatuses and products applied to or integrated into a chip, each module/unit included may be implemented in hardware such as circuits, or at least some part of the modules/units may be implemented in software programs executing on the processor integrated into the chip, and the remaining (if any) part of the modules/units may be implemented in hardware such as circuits. For various apparatuses and products applied to or integrated into a chip module, each module/unit included may be implemented in hardware such as circuits, different modules/units may be in the same component (such as chip, circuit module, etc.) of the chip module or in different components, or at least some part of the modules/units may be implemented in software programs executing on the processor integrated into the chip module, and the remaining (if any) part of the modules/units may be implemented in hardware such as circuits. For various apparatuses and products applied to or integrated into a terminal, each module/unit included may be implemented in hardware such as circuits, different modules/units may be in the same component (such as chip, circuit module, etc.) or different components of the terminal, or at least some part of the modules/units may be implemented in software programs executing on the processor integrated into the terminal, and the remaining (if any) part of the modules/units may be implemented in hardware such as circuits.

An embodiment of the present invention further provides a computer-readable storage medium, which is a non-volatile storage medium or a non-transitory storage medium having computer programs stored thereon. The computer programs, when executed by a processor, perform the steps of the method for transmission of a positioning reference signal provided in above steps 201 to 202 or perform the steps of the method for transmission of a positioning reference signal provided in above steps 201 to 202.

An embodiment of the present invention further provides another apparatus for transmission of a positioning reference signal, comprising a processor and a memory having computer programs executable on the processor stored thereon. The processor, when executing the computer programs, performs the steps of the method for transmission of a positioning reference signal provided in above steps 101 to 102.

An embodiment of the present invention further provides another apparatus for transmission of a positioning reference signal , comprising a processor and a memory having computer programs executable on the processor stored thereon. The processor, when executing the computer programs, performs the steps of the method for transmission of a positioning reference signal provided in above steps 201 to 202.

A person of ordinary skill in the art will understand that all or some of the steps in the various methods in the above embodiments may be instructed to be completed by relevant hardware through programs, which may be stored in a computer-readable storage medium, including ROM, RAM, magnetic disk or optical disk, etc.

Although the present invention is disclosed as above, the present invention is not limited to this. Any person skilled in the art may make various alterations and modifications without departing from the spirit and scope of the present invention. Therefore protection scope of the present invention should be based on the scope defined by the claims.

## Claims

1. A method for transmission of a positioning reference signal , comprising:
obtaining configuration information; and
determining positioning reference signal resources that are associated with a same radio frequency RF chain based on the configuration information.

2. The method for transmission of a positioning reference signal according to claim 1, wherein the determining the positioning reference signal resources associated with the same RF chain based on the configuration information comprises:
obtaining associated positioning reference signal resources based on the configuration information; and
determining that the associated positioning reference signal resources are associated with the same RF chain.

3. The method for transmission of a positioning reference signal according to claim 2, wherein the positioning reference signal comprises at least one of: a downlink positioning reference signal, an uplink sounding reference signal.

4. The method for transmission of a positioning reference signal according to claim 3, wherein the positioning reference signal comprises the downlink positioning reference signal, and wherein the obtaining associated positioning reference signal resources based on the configuration information comprises:
obtaining associations of positioning frequency layers based on the configuration information; and
determining positioning reference signal resources on associated positioning frequency layers as the associated positioning reference signal resources.

5. The method for transmission of a positioning reference signal according to claim 3, wherein the positioning reference signal comprises the uplink sounding reference signal, and wherein the obtaining associated positioning reference signal resources based on the configuration information comprises:
obtaining associations of carriers based on the configuration information; and
determining positioning reference signal resources on associated carriers as the associated positioning reference signal resources.

6. The method for transmission of a positioning reference signal according to claim 3, wherein the obtaining associated positioning reference signal resources based on the configuration information comprises:
obtaining associations of positioning reference signal resource sets based on the configuration information; and
determining positioning reference signal resources of associated positioning reference signal resource sets as the associated positioning reference signal resources.

7. The method for transmission of a positioning reference signal according to claim 6, wherein the positioning reference signal comprises the downlink positioning reference signal, and the associated positioning reference signal resource sets are associated with different positioning frequency layers.

8. The method for transmission of a positioning reference signal according to claim 6, wherein the positioning reference signal comprises the uplink sounding reference signal, and the associated positioning reference signal resource sets are associated with different carriers.

9. The method for transmission of a positioning reference signal according to claim 2, wherein the associated positioning reference signal resources are associated with different positioning reference signal resource sets or a same positioning reference signal resource set.

10. The method for transmission of a positioning reference signal according to claim 1, further comprising:
obtaining positioning frequency layer indication information from configuration parameters of a first positioning reference signal resource set based on the configuration information; and
determining a positioning frequency layer associated with the first positioning reference signal resource set according to the positioning frequency layer indication information.

11. The method for transmission of a positioning reference signal according to claim 10, wherein the determining the positioning frequency layer associated with the first positioning reference signal resource set according to the positioning frequency layer indication information comprises:
determining a configuration parameter of a positioning reference signal resource set in the positioning frequency layer, according to the configuration parameters of the first positioning reference signal resource set and configuration parameters of the positioning frequency layer associated with the first positioning reference signal resource set.

12. The method for transmission of a positioning reference signal according to claim 10, further comprising:
receiving a positioning reference signal transmitted on the positioning frequency layer indicated by the positioning frequency layer indication information according to the configuration parameters of the first positioning reference signal resource set.

13. The method for transmission of a positioning reference signal according to claim 1, wherein the obtaining associated positioning reference signal resources based on the configuration information comprises:
obtaining positioning frequency layer indication information from configuration parameters of a first positioning reference signal resource based on the configuration information; and
determining a positioning frequency layer associated with the first positioning reference signal resource according to the positioning frequency layer indication information.

14. The method for transmission of a positioning reference signal according to claim 13, wherein the determining the positioning frequency layer associated with the first positioning reference signal resource according to the positioning frequency layer indication information comprises:
determining a configuration parameter of a positioning reference signal resource in the positioning frequency layer, according to the configuration parameters of the first positioning reference signal resource and configuration parameters of the positioning frequency layer associated with the first positioning reference signal resource.

15. The method for transmission of a positioning reference signal according to claim 13, further comprising:
receiving a positioning reference signal transmitted on the positioning frequency layer indicated by the positioning frequency layer indication information according to the configuration parameters of the first positioning reference signal resource.

16. A method for transmission of a positioning reference signal, comprising:
generating configuration information, the configuration information indicating positioning reference signal resources that are associated with a same radio frequency RF chain; and
sending the configuration information.

17. The method for transmission of a positioning reference signal according to claim 16, wherein the configuration information indicates associated positioning reference signal resources, and wherein the associated positioning reference signal resources are associated with the same RF chain.

18. The method for transmission of a positioning reference signal according to claim 16, wherein the configuration information indicates associations of positioning frequency layers.

19. The method for transmission of a positioning reference signal according to claim 16, wherein the configuration information indicates associations of carriers.

20. The method for transmission of a positioning reference signal according to claim 16, wherein the configuration information indicates associations of positioning reference signal resource sets.

21. The method for transmission of a positioning reference signal according to claim 16, wherein the configuration information indicates associations of positioning reference signal resources.

22. The method for transmission of a positioning reference signal according to claim 16, wherein the configuration information indicates configuration parameters of a first positioning reference signal resource set, and wherein the configuration parameters of the first positioning reference signal resource set include positioning frequency layer indication information, and wherein the positioning frequency layer associated with the first positioning reference signal resource set is different from the positioning frequency layer indicated by the positioning frequency layer indication information.

23. The method for transmission of a positioning reference signal according to claim 16, wherein the configuration information indicates configuration parameters of a first positioning reference signal resource, and wherein the configuration parameters of the first positioning reference signal resource include positioning frequency layer indication information, and wherein the positioning frequency layer associated with the first positioning reference signal resource is different from the positioning frequency layer indicated by the positioning frequency layer indication information.

24. An apparatus for transmission of a positioning reference signal, comprising:
an obtaining unit for obtaining configuration information; and
a determination unit for determining positioning reference signal resources that are associated with a same radio frequency RF chain based on the configuration information.

25. An apparatus for transmission of a positioning reference signal, comprising:
a generation unit for generating configuration information, the configuration information indicating positioning reference signal resources that are associated with a same radio frequency RF chain; and
a sending unit for sending the configuration information.

26. A computer-readable storage medium, the computer-readable storage medium being a non-volatile storage medium or a non-transitory storage medium, having computer programs stored thereon, wherein the computer programs, when executed by a processor, cause the steps of the method for transmission of a positioning reference signal according to any one of claims 1 to 15 or the steps of the method for transmission of a positioning reference signal according to any one of claims 16 to 23 to be performed.

27. An apparatus for transmission of a positioning reference signal, comprising a memory and a processor, the memory having computer programs executable on the processor stored thereon, wherein the processor, when executing the computer programs, performs the steps of the method for transmission of a positioning reference signal according to any one of claims 1 to 15.

28. An apparatus for transmission of a positioning reference signal, comprising a memory and a processor, the memory having computer programs executable on the processor stored thereon, wherein the processor, when executing the computer programs, performs the steps of the method for transmission of a positioning reference signal according to any one of claims 16 to 23.
